# EUROPÄISCHE PATENTANMELDUNG

(11) **EP 4 447 269 A1**
(43) Veröffentlichungstag der Anmeldung: **16.10.2024**
(21) Anmeldenummer: 23167932.5
(22) Anmeldetag: 14.04.2023
(51) Int. Cl.: H02K 1/20, H02K 3/24, H02K 7/18, H02K 9/19, H02K 3/34

(54) **SPULENANORDNUNG FÜR EINE ELEKTRISCHE MASCHINE, STATOR, ELEKTRISCHE MASCHINE UND WINDENERGIEANLAGE**

(71) Anmelder: Wobben Properties GmbH, 26607 Aurich (DE)
(72) Erfinder: Daboul, Hussam, 26624 Südbrookmerland (DE); Busemann, Steffen, 28309 Bremen (DE); Müller, Michael, 26624 Südbrookmerland (DE)
(74) Vertreter: Eisenführ Speiser

(57) **Zusammenfassung**

Spulenanordnung (1) für eine elektrische Maschine, zum Beispiel für einen Generator, insbesondere für einen Generator einer Windenergieanlage (100), die Spulenanordnung (1) aufweisend: ein Blechpaket (10), insbesondere ein Stator-Blechpaket oder ein Rotor-Blechpaket, mit Zähnen (11), insbesondere mit Statorzähnen oder mit Rotorzähnen, die in einer Umfangsrichtung (U) beabstandet zueinander angeordnet sind, eine erste Spuleneinheit (20) und eine in Umfangsrichtung (U) beabstandet zu der ersten Spuleneinheit angeordnete zweite Spuleneinheit (30), wobei die erste und zweite Spuleneinheit (20, 30) mit einem Abstand (D, D1, D2) zueinander angeordnet sind, wobei die erste und zweite Spuleneinheit (20, 30) jeweils einen Zahn (11) des Blechpakets (10) zumindest teilweise umwickeln, und mindestens eine elektrische Isolierungseinheit (40), die zwischen der ersten Spuleneinheit (20) und der zweiten Spuleneinheit (30) angeordnet ist und zur elektrischen Isolierung ausgebildet ist, um einen elektrischen Kurzschluss zwischen der ersten Spuleneinheit (20) und der zweiten Spuleneinheit (30) zu unterbinden, dadurch gekennzeichnet, dass die elektrische Isolierungseinheit (40) einen Fluidkanal (41) aufweist oder diesen ausbildet, wobei der Fluidkanal (41) ausgebildet ist, zur Temperierung der Spulenanordnung (1) ein Temperierfluid zu führen.

## Beschreibung

Die Erfindung betrifft eine Spulenanordnung für eine elektrische Maschine. Ferner betrifft die Erfindung einen Stator, eine elektrische Maschine sowie eine Windenergieanlage.

Eine elektrische Maschine ist beispielsweise ein elektrischer Generator (in dieser Anmeldung auch nur Generator genannt) oder ein elektrischer Motor, auch Elektromotor genannt. Der Generator wandelt Bewegungsenergie in elektrische Energie. Der Elektromotor wandelt elektrische Energie in Bewegungsenergie.

Elektrische Maschinen, insbesondere Generatoren, bestehen hierzu aus einem Rotor, auch Läufer genannt, der sich relativ zu einem feststehenden Stator bewegt, insbesondere dreht, um Bewegungsenergie, insbesondere Rotationsenergie, in elektrische Energie zu wandeln. Als Generatoren sind Außenläufer bekannt, bei denen der Stator innerhalb des Rotors angeordnet ist und der Rotor sich im Betrieb des Generators außerhalb des Stators um den Stator dreht. Ferner sind als Generatoren Innenläufer bekannt, bei denen der Rotor innerhalb des Stators angeordnet ist und der Rotor sich im Betrieb des Generators innerhalb des Stators dreht.

In Windenergieanlagen werden Generatoren beispielsweise eingesetzt, um die Bewegungsenergie des aerodynamischen Rotors der Windenergieanlage in elektrische Energie zu wandeln, die dann zur Versorgung der Haushalte und der Industrie in das Versorgungsnetz eingespeist werden kann. Hierzu ist der aerodynamische Rotor, an dem die Rotorblätter montiert sind, welche die Windenergie in die kinetische Bewegungsenergie des aerodynamischen Rotors, d.h. die Rotationsenergie, wandeln, mit dem Rotor des Generators verbunden.

Die Erfindung wird vorliegend insbesondere in Bezug zu einem (elektrischen) Generator beschrieben wie er für Windenergieanlagen eingesetzt wird. Die Erfindung ist jedoch nicht hierauf beschränkt, sondern für jegliche Arten elektrischer Maschinen und für deren verschiedene Anwendungsbereiche geeignet.

Elektrische Maschinen, insbesondere Generatoren, beruhen auf dem physikalischen Grundprinzip der elektromagnetischen Induktion. Entsprechend weisen die Generatoren Wicklungen von Spuleneinheiten auf. Hierbei können verteilte Wicklungen oder konzentrierte Wicklungen vorgesehen werden. Bei konzentrierten Wicklungen wird ein einzelner Statorzahn eines Stators oder ein einzelner Rotorzahn eines Rotors mit der Spuleneinheit umwickelt wohingegen bei einer verteilten Wicklung die Spuleneinheit über mindestens zwei Statorzähne des Stators oder über mindestens zwei Rotorzähne des Rotors gewickelt wird.

Elektrische Maschinen im Allgemeinen und Generatoren im Speziellen, insbesondere Generatoren für Windenergieanlagen, müssen temperiert werden. Dies ist einerseits erforderlich, um einen hohen Wirkungsgrad zu gewährleisten, und andererseits erforderlich, um eine hohe Lebensdauer des Generators sicherzustellen. Elektrische Maschinen weisen in einem bestimmten Temperaturfenster unter Berücksichtigung einer möglichst langen Lebensdauer den höchstmöglichen Wirkungsgrad auf. Daher werden elektrische Maschinen vorzugsweise auf diesen Temperaturbereich temperiert.

Für eine möglichst effektive Temperierung strebt man in aller Regel die Wärmeabfuhr bzw. -zufuhr vorzugsweise im Bereich oder in der Nähe der Wärmequelle an. Häufiger besteht bei Generatoren und entsprechend bei elektrischen Maschinen der Bedarf, den Generator zu kühlen. Es können aber auch Anwendungsszenarien oder Anwendungsumgebungen existieren, in denen es erforderlich ist, den Generator auf eine bestimmte Temperatur zu erwärmen.

Generatoren werden üblicherweise mittels einem Gas oder Gasgemisch, insbesondere Luft, temperiert. Manchmal ist es bevorzugt, zwischen den Spuleneinheiten Wasserrohre oder Heatpipes zu führen, die die Wärme der Spuleneinheiten abführen bzw. den Spuleneinheiten zuführen. Um einen elektrischen Kurzschluss zu vermeiden, müssen die Wasserrohre oder Heatpipes entsprechend elektrisch isoliert werden. Dies wirkt sich in der Regel nachteilig auf die Wärmeleitfähigkeit aus, welche hierdurch herabgesetzt wird, so dass der Wirkungsgrad der Generatoren sinkt bzw. die Generatoren nicht ausreichend temperiert werden können. Ferner ist die Herstellung solcher Generatoren aufwändig, da elektrisch leitende Rohre, welche das Temperierfluid führen, zwischen elektrisch leitenden Spuleneinheiten angeordnet werden müssen, ohne dass einerseits ein Kurzschluss entsteht und andererseits eine ausreichende Wärmeleitfähigkeit sichergestellt wird, welche eine zuverlässige Temperierung der Spulenanordnung und somit der elektrischen Maschine, insbesondere des Generators, gewährleistet.

Der Erfindung liegt somit die Aufgabe zugrunde, eine Spulenanordnung für eine elektrische Maschine, insbesondere für einen Generator, einen Stator, eine elektrische Maschine, insbesondere einen Generator, und eine Windenergieanlage bereitzustellen, welche gegenüber der bekannten Lösung verbessert ist. Insbesondere liegt der Erfindung die Aufgabe zugrunde, eine Spulenanordnung für eine elektrische Maschine, insbesondere für einen Generator, einen Stator, eine elektrische Maschine, insbesondere einen Generator, und eine Windenergieanlage bereitzustellen, welche in der Herstellung technisch weniger komplex und kostengünstiger ist und dennoch eine zuverlässige Temperierung der Spulenanordnung und damit der elektrischen Maschine, insbesondere des Generators, gewährleistet.

Gemäß einem ersten Aspekt der Erfindung wird die Aufgabe durch eine Spulenanordnung der eingangs beschrieben Art gelöst, wobei die erfindungsgemäße Spulenanordnung aufweist: ein Blechpaket, insbesondere ein Stator-Blechpaket oder ein Rotor-Blechpaket, mit Zähnen, insbesondere mit Statorzähnen oder mit Rotorzähnen, die in einer Umfangsrichtung beabstandet zueinander angeordnet sind, eine erste Spuleneinheit und eine in Umfangsrichtung beabstandet zu der ersten Spuleneinheit angeordnete zweite Spuleneinheit, wobei die erste und zweite Spuleneinheit mit einem Abstand zueinander angeordnet sind, wobei die erste und zweite Spuleneinheit jeweils einen Zahn des Blechpakets zumindest teilweise umwickeln, und mindestens eine elektrische Isolierungseinheit, die zwischen der ersten Spuleneinheit und der zweiten Spuleneinheit angeordnet ist und zur elektrischen Isolierung ausgebildet ist, um einen elektrischen Kurzschluss zwischen der ersten Spuleneinheit und der zweiten Spuleneinheit zu unterbinden, dadurch gekennzeichnet, dass die elektrische Isolierungseinheit einen Fluidkanal aufweist oder diesen ausbildet, wobei der Fluidkanal ausgebildet ist, zur Temperierung der Spulenanordnung ein Temperierfluid zu führen.

Die Erfindung beruht auf der Erkenntnis der Erfinder, dass die elektrische Isolierungseinheit selbst den Fluidkanal aufweisen kann oder ausbilden kann, ohne dass hierzu Rohre oder Heatpipes oder sonstige separate fluidleitende Leitungen in der elektrischen Isolierungseinheit zwischen der ersten und zweiten Spuleneinheit angeordnet werden müssen, welche den Fluidkanal ausbilden. Dies hat den Vorteil, dass die Teileanzahl die eine Spulenanordnung und somit ein Generator umfasst, reduziert wird, was den Aufwand sowohl in der Herstellung, insbesondere der Arbeitsvorbereitung, und in der Produktionsplanung minimiert.

Ferner beruht die Erfindung auf der Erkenntnis der Erfinder, dass die Anforderungen der elektrischen Isolierungseinheit dahingehend geringer werden, da nun ein Kurzschluss nicht mehr über den vergleichsweise kurzen Abstand zwischen den Spuleneinheiten und den Rohren oder Heatpipes verhindert werden muss. Insbesondere ist es somit hierdurch möglich, die Wärmeleitfähigkeit der elektrischen Isolierungseinheit vornehmlicher in den Fokus zu setzen und somit eine verbesserte Temperierung der Spulenanordnung und somit des Generators zu ermöglichen.

Die vorliegende Spulenanordnung ist für eine elektrische Maschine vorgesehen. Vorzugsweise ist die elektrische Maschine eine elektrische Maschine für eine Windenergieanlage. Die elektrische Maschine ist insbesondere eine induktive elektrische Maschine. Insbesondere ist die induktive elektrische Maschine eine induktive elektrische Maschine für eine Windenergieanlage. Die elektrische Maschine ist zum Beispiel für einen Generator, insbesondere für einen Generator einer Windenergieanlage vorgesehen.

Bei den elektrischen Maschinen, die für die vorliegende Erfindung in Betracht kommen, dreht ein Rotor relativ zu einem feststehenden Stator um eine Drehachse. Hierbei kann der Rotor außen und der Stator innen, innerhalb des Rotors angeordnet sein, so dass die elektrische Maschine als Außenläufer ausgebildet ist. Ebenso sind elektrische Maschinen bekannt, bei denen der sich um eine Drehachse drehende Rotor innen angeordnet ist und der feststehende Stator außen angeordnet ist, so dass dieser den Rotor umschließt, die elektrische Maschine also als Innenläufer ausgebildet ist.

Vorliegend wird die Erfindung und entsprechend auch die elektrische Maschine im Wesentlichen als Generator einer Windenergieanlage beschrieben. Die Erfindung und die Verwendung der elektrischen Maschine ist jedoch nicht auf den Anwendungsbereich von Generatoren für Windenergieanlagen beschränkt, sondern prinzipiell für elektrische Maschinen in jeglichen Anwendungsgebieten relevant.

Angaben wie Axial, Radial und Umfang oder Länge, Breite und Höhe werden in Bezug zur Drehachse einer elektrischen Maschine mit der Spulenanordnung im Betriebszustand beschrieben soweit dies nicht anderweitig spezifiziert ist. Selbstverständlich ist zu verstehen, dass dies in einer Transportposition oder Montageposition der elektrischen Maschine entsprechend abweichen kann. Axialangaben sind hierbei Angaben, die sich auf Erstreckungen entlang der Drehachse beziehen. Breitenangaben beziehen sich üblicherweise auf Erstreckungen in Axialrichtung. Umfangsangaben sind Angaben, die sich auf Erstreckungen um die Drehachse beziehen. Längenangaben beziehen sich üblicherweise auf Erstreckungen in Umfangsrichtung. Radialangaben sind Angaben, die sich auf Erstreckungen orthogonal zu der Drehachse und die Drehachse schneidend beziehen. Höhenangaben beziehen sich üblicherweise auf Erstreckungen in Radialrichtung.

Je nach Bauart wird ferner zwischen Innenpolmaschinen und Außenpolmaschinen unterschieden. Sowohl bei der Innenpolmaschine als auch bei der Außenpolmaschine kann das magnetische Erregerfeld durch Permanentmagnete oder durch Spulen fremderregt werden. Erfindungsgemäß kann die Spulenanordnung für eine Innenpolmaschine oder für eine Außenpolmaschine ausgebildet sein, wobei sowohl die Innenpolmaschine als auch die Außenpolmaschine als Außen- oder Innenläufer ausgebildet sein können.

Ist die Wicklung der Spuleneinheit statorseitig vorgesehen, wird die elektromagnetische Induktion durch das Magnetfeld im Rotor erzeugt, wobei das Magnetfeld durch Permanentmagnete oder auch fremderregt erzeugt werden kann. Bei dieser Anordnung spricht man auch von Innenpolmaschinen. Das heißt, bei Innenpolmaschinen ist das magnetische Erregerfeld im bzw. am Rotor vorgesehen und die Spuleneinheiten sind am Stator vorgesehen, in denen induziert durch das rotierende magnetische Erregerfeld, d.h. durch die sich verändernden magnetischen Feldlinien, eine (Wechsel)Spannung eingebracht wird.

Wird das magnetische Feld hingegen im Stator erzeugt und sind die Wicklungen der Spuleneinheit rotorseitig vorgesehen, entsteht elektrische Energie aufgrund elektromagnetischer Induktion im Rotor. Bei dieser Anordnung spricht man von Außenpolmaschinen. Bei einer Außenpolmaschine ist das magnetische Erregerfeld somit im bzw. am Stator vorgesehen und die Spuleneinheiten sind am Rotor vorgesehen. Folglich induziert das stationäre magnetische Erregerfeld, d.h. die stationären magnetischen Feldlinien, eine (Wechsel)Spannung in den sich drehenden Spuleinheiten.

Üblicherweise ist die Spulenanordnung und entsprechend das Blechpaket ringförmig oder teilringförmig ausgebildet. Insbesondere kann vorgesehen sein, dass die Spulenanordnung und entsprechend das Blechpaket von einem Stator-Teilringsegment des Stators oder von einem Rotor-Teilringsegment des Rotors umfasst ist. Üblicherweise bilden zwei oder mehrere Stator-Teilringsegmente den Stator und/oder zwei oder mehrere Rotor-Teilringsegmente den Rotor. Es kann auch bevorzugt sein, dass der Stator aus einem einzigen Stator-Ringsegment gebildet wird, welches sich in Bezug zu der Drehachse der elektrischen Maschine in Umfangsrichtung um 360° erstreckt, und/oder der Rotor aus einem einzigen Rotor-Ringsegment gebildet wird, welches sich in Bezug zu der Drehachse der elektrischen Maschine in Umfangsrichtung um 360° erstreckt. Werden der Stator und/oder der Rotor hingegen aus zwei Teilringsegmenten gebildet, erstrecken sich diese jeweils vorzugsweise um 180° in Umfangsrichtung. Bilden drei Teilringsegmente sowohl den Rotor oder den Stator, erstrecken sich diese insbesondere über 120° in Umfangsrichtung.

Die Spulenanordnung und entsprechend das Blechpaket erstrecken sich in einer Umfangsrichtung um die Drehachse mit einer Länge und entlang der Drehachse in einer Axialrichtung mit einer Breite. Ferner erstreckt sich die Spulenanordnung und entsprechend das Blechpaket in Bezug zu der Drehachse in einer Radialrichtung mit einer Höhe. Vorzugsweise weist die Spulenanordnung und entsprechend das Blechpaket eine Haupterstreckungsrichtung in Umfangsrichtung und/oder in Axialrichtung auf. Üblicherweise ist die Erstreckung der Spulenanordnung und entsprechend das Blechpaket in der Radialrichtung, d.h. die Höhe, kleiner als die Erstreckung in der Umfangsrichtung, d.h. die Länge, und in der Axialrichtung, d.h. der Breite.

Vorzugsweise erstrecken sich die Spulenanordnung und entsprechend das Blechpaket in einer Axialrichtung zwischen zwei Axial-Stirnflächen mit der Breite. Ferner ist es bevorzugt, dass sich die Spulenanordnung und entsprechend das Blechpaket in einer Umfangsrichtung zwischen zwei Umfangs-Stirnflächen mit der Länge erstrecken. Insbesondere erstrecken sich die die Spulenanordnung und entsprechend das Blechpaket in der Radialrichtung zwischen einer innenliegenden Umfangsfläche, auch Innenumfangsfläche genannt, und einer außenliegenden Umfangsfläche, auch Außenumfangsfläche genannt, mit der Höhe.

Ist die Spulenanordnung für eine elektrische Maschine vorgesehen, bei der die Spuleneinheiten statorseitig vorgesehen sind und die elektrische Maschine als Innenläufer ausgebildet ist, umschließt die Spulenanordnung als Teil des Stators den innenliegenden Rotor. Bei dieser Anordnung ist die Spulenanordnung in Bezug zu einer Drehachse der elektrischen Maschine gegenüber dem Rotor in einer Radialrichtung außenliegend angeordnet.

Ist die Spulenanordnung für eine elektrische Maschine vorgesehen, bei der die Spuleneinheiten statorseitig vorgesehen sind und die elektrische Maschine als Außenläufer ausgebildet ist, umschließt der außenliegende Rotor die innenliegende Spulenanordnung des Stators. Bei dieser Anordnung ist die Spulenanordnung in Bezug zu einer Drehachse der elektrischen Maschine gegenüber dem Rotor in einer Radialrichtung innenliegend angeordnet.

Die Spuleneinheiten umfassen in bevorzugter Weise einen Draht oder eine Litze als elektrischen Leiter, welcher aufgewickelt ist. Vorzugsweise weisen die Spuleneinheiten eine orthozyklische Wicklung auf, bei der die Windungen der Oberwicklung in den Tälern der Unterwicklung abgelegt werden. Es kann auch Anwendungsbereich geben, in denen die Spuleneinheiten eine schraubenförmige oder wilde Wicklung aufweisen. Insbesondere kann es auch bevorzugt sein, dass die Spuleneinheiten gegossene Spulen aufweisen.

Es ist bevorzugt, dass die elektrische Maschine eine dreiphasige elektrische Maschine ist. Eine dreiphasige elektrische Maschine wird in der Regel mit einem Dreiphasenwechselstrom betrieben, welcher in drei elektrischen Leitern eine periodisch um 120° versetzte Spannung anlegt. Vorliegend ist vorzugsweise vorgesehen, dass die erste Spuleneinheit Teil einer ersten Phase ist und die zweite Spuleneinheit Teil einer zweiten Phase ist, die von der ersten Phase verschieden ist. Es ist insbesondere bevorzugt, dass die Spulenanordnung eine dritte Spuleneinheit aufweist, die von der ersten und zweiten Spuleneinheit verschieden ist und beabstandet zu der ersten und zweiten Spuleneinheit angeordnet ist. Vorzugsweise ist vorgesehen, dass die dritte Spuleneinheit Teil einer dritten Phase ist.

Bei beiden zuvor beschriebenen Anordnungen sind die erste und zweite Spuleneinheit und vorzugsweise die dritte Spuleneinheit an einem Blechpaket des Stators, auch Stator-Blechpaket genannt, angeordnet. Das Stator-Blechpaket weist hierzu Statorzähne auf, welche von der ersten und zweiten Spuleneinheit zumindest teilweise umwickelt sind. In der Anordnung der elektrischen Maschine als Innenläufer ist vorgesehen, dass die Statorzähne sich in Radialrichtung nach innen erstrecken und sich insoweit rückseitig zu den Statorzähnen die Außenumfangsfläche des Blechpakets erstreckt und die Spitzen der Statorzähne die Innenumfangsfläche bilden oder in dieser liegen und dem in Radialrichtung innenliegenden Rotor zugewandt sind. Ist als elektrische Maschine hingegen ein Außenläufer vorgesehen, erstrecken sich die Statorzähne in Radialrichtung nach außen, so dass sich die Innenumfangsfläche rückseitig der Statorzähne erstreckt und die Spitzen der Statorzähne die Außenumfangsfläche bilden oder in dieser liegen und dem in Radialrichtung außenliegenden Rotor zugewandt sind.

Das Blechpaket, dies gilt sowohl für das Statorblechpaket als auch für das Rotorblechpaket, besteht aus mehreren Stahlblechen, die in Axialrichtung aufeinandergestapelt sind. Ergänzend oder alternativ kann vorgesehen sein, dass das Blechpaket in Umfangsrichtung benachbart zueinander angeordnete Stahlbleche aufweisen kann. Die einzelnen Stahlbleche sind vorzugsweise als Teilringsegmente ausgebildet. Vorzugsweise bilden mehrere in Umfangsrichtung benachbart angeordnete Stahlbleche ebenfalls ein Teilringsegment oder ein Ringsegment. Die Stahlbleche können hierbei in bevorzugter Weise in der Axialrichtung derart gestapelt sein, dass ein Stahlblech einer Stapelebene einen stirnseitigen Kontaktbereich zwischen zwei in Umfangsrichtung benachbart zueinander angeordneten Stapelblechen einer weiteren Stapelebene überlappt.

Es ist zu verstehen, dass die einzelnen Stahlbleche ebenfalls Zähne aufweisen, so dass die aufeinandergestapelten Stahlbleche die Zähne des Blechpakets ausbilden. Die Zähne der Stahlbleche und entsprechend auch der Blechpakete sind derart ausgebildet, dass diese ein Sägezahnmuster bilden. Üblicherweise bilden die Zähne hierbei ein rechteckförmiges Sägezahnprofil, bei dem die Zähne im Wesentlichen ein rechteckförmiges Profil aufweisen und/oder die Täler bzw. die Ausnehmungen zwischen benachbart angeordneten Zähnen ein im Wesentliches rechteckförmiges Profil aufweisen. Ergänzend und alternativ kann vorgesehen sein, dass die Zähne ein U-förmiges Sägezahnprofil ausbilden, bei dem die Zähne im Wesentlichen ein U-förmiges Profil aufweisen und/oder die Täler bzw. die Ausnehmungen zwischen benachbart angeordneten Zähnen ein im Wesentlichen U-förmiges Profil aufweisen. Davon abweichende Profilformen sind prinzipiell ebenfalls denkbar.

Das Blechpaket ist derart ausgebildet, dass diese mehrere Spuleneinheiten aufnehmen können, so dass die jeweiligen Spuleneinheiten einen Zahn des Blechpakets zumindest teilweise umschließen. Es ist insofern erforderlich, dass die Zähne des Blechpakets in Umfangsrichtung beabstandet zueinander angeordnet sind. Entsprechend bildet das Blechpaket zwischen den Zähnen Nuten oder Ausnehmungen aus, die eine Haupterstreckungsrichtung in Axialrichtung aufweisen. Die Breite dieser Nut bzw. der Abstand zwischen benachbarten Zähnen des Blechpakets ist hierbei insbesondere derart zu wählen, dass zumindest zwei Spuleneinheiten in der Nut zwischen den Zähnen aufgenommen werden können. Insbesondere ist die Breite dieser Nut bzw. der Abstand zwischen benachbarten Zähnen des Blechpakets derart zu wählen, dass eine konzentrierte oder eine verteilte Wicklung der Spuleneinheiten vorgenommen werden kann. Hierdurch wird die thermische Isolierung bzw. der thermische Widerstand gesenkt und somit die Effizienz des Kühlsystems bzw. des Generators erhöht.

Der Abstand zwischen benachbarten Zähnen des Blechpakets beträgt vorzugsweise mindestens 5 mm, 10 mm, 20 mm, 100 mm, 150 mm oder 200 mm. Ergänzend oder alternativ ist es bevorzugt, dass der Abstand zwischen benachbarten Zähnen des Blechpakets vorzugsweise maximal 5 mm, 10 mm, 20 mm, 100 mm, 150 mm oder200 mm beträgt.

Aus den oben genannten Gründen ist entsprechend auch die Erstreckung der Zähne in Radialrichtung bzw. die Tiefe der Nut in Radialrichtung zu wählen. Die Höhe der Zähne bzw. die Tiefe der Nut ist vorzugsweise derart zu wählen, dass eine konzentrierte oder eine verteilte Wicklung der Spuleneinheiten vorgesehen werden kann. Die Höhe der Zähne beträgt vorzugsweise mindestens 10 mm, 20 mm, 40 mm, 80 mm, 160 mm oder 240 mm. Ergänzend oder alternativ ist es bevorzugt, dass die Höhe der Zähne vorzugsweise mindestens 10 mm, 20 mm, 40 mm, 80 mm, 160 mm oder 240 mm beträgt.

Der Abstand zwischen in Umfangsrichtung benachbart angeordneten Zähnen bzw. der Breite der Nut, welche durch benachbart angeordnete Zähne ausgebildet wird, ist insbesondere derart zu wählen, dass zwischen der ersten und zweiten Spuleneinheit, die zwischen zwei benachbart angeordneten Zähnen angeordnet sind, ausreichend Platz besteht, so dass zwischen der ersten und zweiten Spuleneinheit eine elektrische Isolierungseinheit angeordnet ist, welche einen Kurzschluss zwischen den beiden Spuleneinheiten unterbindet und gleichzeitig einen Fluidkanal ausbildet, der zur Temperierung der Spulenanordnung ein Temperierfluid führt. Entsprechend muss die elektrische Isolierungseinheit wärmeleitfähige Eigenschaften aufweisen, so dass die Spulenanordnung auf einen gewünschten Temperaturbereich oder auf eine gewünschte Temperatur temperiert werden kann. Die elektrische Isolierungseinheit muss somit einerseits ausgebildet sein, einen elektrischen Kurzschluss zu vermeiden und andererseits geeignet sein, Wärme zu leiten. Dies gilt selbstverständlich auch für eine dritte Spuleneinheit, wenn diese in bevorzugter Weise vorgesehen wird.

Der Abstand zwischen der ersten und zweiten Spuleneinheit beträgt aus diesen Gründen mindestens 1 mm, 2 mm, 4 mm, 6 mm, 8 mm, 10 mm, 15 mm oder 20 mm und/oder maximal 1 mm, 2 mm, 4 mm, 6 mm, 8 mm, 10 mm, 15 mm oder 20 mm.

Der innerhalb der Isolierungseinheit vorgesehene Fluidkanal weist vorzugsweise eine Haupterstreckung in Axialrichtung auf. Vorzugsweise entspricht die Haupterstreckungsrichtung des Fluidkanals der Haupterstreckungsrichtung der Spuleneinheiten in der Axialrichtung. Insbesondere ist vorgesehen, dass die Erstreckung des Fluidkanals in der Axialrichtung mindestens 10%, 20%, 30%, 40%, 50%, 60%, 70%, 80%, 90% oder 100% der Erstreckung der Spuleneinheiten in Axialrichtung beträgt und/oder maximal 10%, 20%, 30%, 40%, 50%, 60%, 70%, 80%, 90% oder 100% der Erstreckung der Spuleneinheiten in Axialrichtung beträgt. Die Maximalerstreckung ist stets größer als die Minimalerstreckung.

Weiterhin ist vorgesehen, dass der Fluidkanal in Radialrichtung eine Erstreckung aufweist, die kleiner ist als die Erstreckung in Radialrichtung der Zähne des Blechpakets und/oder der Erstreckung in Radialrichtung mindestens einer Spuleneinheit, vorzugsweiser aller Spuleneinheiten. Vorzugsweise ist vorgesehen, dass die Erstreckung des Fluidkanals in der Radialrichtung mindestens 10%, 20%, 30%, 40%, 50%, 60%, 70%, 80%, 90% oder 100% der Erstreckung der Spuleneinheiten in Radialrichtung beträgt und/oder maximal 10%, 20%, 30%, 40%, 50%, 60%, 70%, 80%, 90% oder 100% der Erstreckung der Spuleneinheiten in Radialrichtung beträgt. Selbstverständlich ist hierbei vorgesehen, dass die Maximalerstreckung größer ist als die Minimalerstreckung.

Der Fluidkanal weist eine Breite in Umfangsrichtung, eine Höhe in Radialrichtung und eine Länge in Axialrichtung auf. Vorzugsweise ist vorgesehen, dass der Fluidkanal in Umfangsrichtung eine konstante Breite aufweist und/oder eine konstante Länge aufweist und/oder eine konstante Höhe aufweist. Insbesondere kann es bevorzugt sein, dass die Breite des Fluidkanals über die Höhe des Fluidkanals konstant ist. Alternativ kann es bevorzugt sein, dass die Breite des Fluidkanals über die Höhe variiert. Insbesondere kann es bevorzugt sein, dass die Breite über die Höhe abnimmt und/oder zunimmt. Vorzugsweise ist vorgesehen, dass die Breite des Fluidkanals in Radialrichtung von innen nach außen abnimmt oder zunimmt.

Es ist bevorzugt, dass der Fluidkanal einen kreisförmigen oder polygonalen Querschnitt oder eine Kombination davon aufweist. Insbesondere kann es bevorzugt sein, dass der polygonale Querschnitt ein viereckiger Querschnitt ist. Vorzugsweise ist der Querschnitt des Fluidkanals quadratisch oder rechteckförmig oder trapezförmig ausgebildet.

Bei einem Fluidkanal, der einen rechteckförmigen Querschnitt aufweist, ist es bevorzugt, dass die Höhe des Fluidkanals größer ist als dessen Breite.

Bei einem Fluidkanal, der einen trapezförmigen Querschnitt aufweist, kann es bevorzugt sein, dass der Fluidkanal auf der in Radialrichtung innenliegend eine geringere Breite aufweist als in Radialrichtung außenliegend. Alternativ kann bei einem Fluidkanal, der einen trapezförmigen Querschnitt aufweist, vorzugsweise vorgesehen sein, dass der Fluidkanal auf der in Radialrichtung innenliegend eine größere Breite aufweist als in Radialrichtung außenliegend.

Die Wandstärke der Isolierungseinheit beträgt vorzugsweise mindestens 0,1 mm, 0,5 mm, 1 mm, 1,5 mm, 2 mm, 2,5 mm, 3 mm, 3,5 mm, 4 mm, 4,5 mm, 5 mm oder 10 mm. Ergänzend oder alternativ beträgt die Wandstärke der Isolierungseinheit vorzugsweise maximal 0,1 mm, 0,5 mm, 1 mm, 1,5 mm, 2 mm, 2,5 mm, 3 mm, 3,5 mm, 4 mm, 4,5 mm, 5 mm oder 10 mm.

Die Erstreckung der Isolierungseinheit in Axialrichtung, d.h. der Breite, beträgt vorzugsweise mindestens 100 mm, 200 mm, 300 mm, 400 mm, 500 mm, 600 mm, 700 mm, 800 mm, 900 mm, 1000 mm, 1500 mm oder 2000 mm. Ergänzend oder alternativ beträgt die Erstreckung der Isolierungseinheit in Axialrichtung, d.h. der Breite, vorzugsweise maximal 100 mm, 200 mm, 300 mm, 400 mm, 500 mm, 600 mm, 700 mm, 800 mm, 900 mm, 1000 mm, 1500 mm oder 2000 mm.

Die Erstreckung der Isolierungseinheit in Radialrichtung, d.h. der Höhe, beträgt vorzugsweise mindestens 1 mm, 2 mm, 3 mm, 4 mm, 5 mm, 10 mm, 50 mm, 100 mm, 150 mm, 200 mm oder 240 mm. Ergänzend oder alternativ beträgt die Erstreckung der Isolierungseinheit in Radialrichtung vorzugsweise maximal 1 mm, 2 mm, 3 mm, 4 mm, 5 mm, 10 mm, 50 mm, 100 mm, 150 mm, 200 mm oder 240 mm.

Die Erstreckung des Fluidkanals in Axialrichtung, d.h. der Breite, beträgt vorzugsweise mindestens 100 mm, 200 mm, 300 mm, 400 mm, 500 mm, 600 mm, 700 mm, 800 mm, 900 mm, 1000 mm, 1500 mm oder 2000 mm. Ergänzend oder alternativ beträgt die Erstreckung des Fluidkanals in Axialrichtung, d.h. der Breite, vorzugsweise maximal 100 mm, 200 mm, 300 mm, 400 mm, 500 mm, 600 mm, 700 mm, 800 mm, 900 mm, 1000 mm, 1500 mm oder 2000 mm.

Es ist zu verstehen, dass diese Ausführungen betreffend die statorseitige Anordnung der Spulenanordnung entsprechend auch für die rotorseitige Anordnung der Spulenanordnung gelten.

Insbesondere ist vorgesehen, dass die Wärmeleitfähig der Isolierungseinheit derart ausgebildet ist, dass die Spuleneinheiten der Spulenanordnung im Betrieb optimal in einem Betriebstemperaturbereich mit dem Temperierfluid in dem Fluidkanal temperiert werden können.

In einer bevorzugten Fortbildung der der Spulenanordnung ist vorgesehen, dass die elektrische Isolierungseinheit bei 20°C einen Wärmeleitkoeffizienten von mindestens von 0.001 W/(m*K), vorzugsweise von mindestens 0.1 W/(m*K), aufweist, und von maximal 50 W/(m*K), vorzugsweise maximal 3 W/(m*K), aufweist. Eine Isolierungseinheit, die Wärmeleitkoeffizienten in diesem Bereich bzw. diesem bevorzugten Bereich aufweist, ermöglicht eine besonders effiziente Temperierung der Spuleneinheiten der Spulenanordnung.

Ferner ist gemäß einer bevorzugten Fortbildung der Spulenanordnung vorgesehen, dass die elektrische Isolierungseinheit aus einem glasfaserverstärkten Kunststoff und/oder einem Silikon besteht oder glasfaserverstärkten Kunststoff und/oder Silikon umfasst. Dies stellt einerseits eine ausreichende elektrische Isolierung sicher, welche einen Kurzschluss verhindert und gewährleistet andererseits gleichzeitig eine ausreichend große Wärmeleitfähigkeit, welche eine Temperierung der Spuleneinheiten und somit einen effizienten Betrieb der Spulenanordnung und folglich der elektrischen Maschine ermöglicht.

Weiterhin ist für eine bevorzugte Ausführungsform der Spulenanordnung vorgesehen, dass die elektrische Isolierungseinheit wärmeleitfähige Additive aufweist, wobei die wärmeleitfähigen Additive vorzugsweise Additive aus Silikon und/oder Keramik umfassen. Durch die wärmeleitfähigen Additive lässt sich die Wärmeleitfähigkeit der elektrischen Isolierungseinheit weiter steigern, ohne dass hierunter die elektrische Isolierung leidet und die Gefahr eines Kurzschlusses zunimmt.

Nach einer weiteren bevorzugten Ausführungsform der Spulenanordnung ist in bevorzugter Weise vorgesehen, dass der Abstand zwischen der ersten und zweiten

Spuleneinheit in einer Radialrichtung variiert, wobei der Abstand vorzugsweise in der Radialrichtung von einer in Radialrichtung innenliegenden Umfangsseite der elektrischen Isolierungseinheit zu einer in Radialrichtung außenliegenden Umfangsseite der elektrischen Isolierungseinheit größer wird, so dass der Abstand zwischen der ersten und zweiten Spuleneinheit an der außenliegenden Umfangsseite größer ist als der Abstand zwischen der ersten und zweiten Spuleneinheit an der innenliegenden Umfangsseite.

Vorzugsweise ist vorgesehen, dass der Abstand zwischen der ersten und zweiten Spuleneinheit in einer Radialrichtung abnimmt und/oder zunimmt. Insbesondere kann der Abstand zwischen der ersten und zweiten Spuleneinheit in der Radialrichtung von innen nach außen zunehmen und/oder abnehmen. Ferner kann es bevorzugt sein, dass der Abstand zwischen der ersten und zweiten Spuleneinheit in der Radialrichtung von außen nach innen zunimmt und/oder abnimmt.

Gemäß einer weiteren bevorzugten Fortbildung der Spulenanordnung bildet die Isolierungseinheit den Fluidkanal als Fluidleitung oder als Fluidrohr aus. Dies hat insbesondere den Vorteil, dass keine separaten Rohre oder Leitungen vorgesehen werden müssen, durch welche zur Temperierung der Spuleneinheiten das Temperierfluid geführt wird. Insofern ermöglicht diese bevorzugte Ausführungsform eine kompaktere Anordnung der Spuleneinheiten und somit eine kompaktere Bauweise der Spulenanordnung.

Weiterhin ist gemäß einer bevorzugten Fortbildung der Spulenanordnung vorgesehen, dass die elektrische Isolierungseinheit eine Fluidkanalwand des Fluidkanals ausbildet, die den Fluidkanal zumindest teilweise räumlich begrenzt, wobei in dem Fluidkanal, insbesondere an der Fluidkanalwand, Wirbelgeneratoren und/oder statische Mischer angeordnet sind, welche die Oberfläche zur Wärmeableitung der Wärme von der ersten Spuleneinheit und/oder der zweiten Spuleneinheit zu dem Temperierfluid im Betrieb erhöhen und/oder eine turbulente Strömung des Temperierfluids in dem Fluidkanal bedingen.

Ergänzend oder alternativ ist gemäß dieser bevorzugten Fortbildung der Spulenanordnung vorgesehen, dass an der Fluidkanalwand eine profilierte Oberfläche, insbesondere eine rillenförmige Oberfläche, ausgebildet ist, welche die Oberfläche zur Wärmeableitung der Wärme von der ersten Spuleneinheit und/oder der zweiten Spuleneinheit zu dem Temperierfluid im Betrieb erhöht und/oder eine turbulente Strömung des Temperierfluids in dem Fluidkanal bedingt.

Ferner kann durch diese bevorzugte Fortbildung zur Temperierung der Spuleneinheiten die Wärmezufuhr von dem Temperierfluid zu den Spuleneinheiten verbessert werden.

In einer ferner bevorzugten Ausführungsform der Spulenanordnung ist vorgesehen, dass in dem Fluidkanal im Betrieb der Spulenanordnung das Temperierfluid zur Temperierung der ersten Spuleneinheit und/oder der zweiten Spuleneinheit geführt wird.

Weiterhin ist gemäß einer bevorzugten Ausführungsform der Spulenanordnung vorgesehen, dass das Temperierfluid aus Wasser und/oder Glykol und/oder Öl und/oder einem Gas und/oder einem Gasgemisch, insbesondere Luft, und/oder Flutec PP9 besteht und/oder das Temperierfluid Wasser und/oder Glykol und/oder Öl und/oder Gas und/oder ein Gasgemisch, insbesondere Luft, und/oder Flutec PP9 umfasst.

In einer weiteren bevorzugten Ausführungsform der Spulenanordnung ist vorgesehen, dass der Fluidkanal einen kreisförmigen und/oder einen polygonalen, insbesondere einen viereckigen, quadratischen, rechteckigen oder trapezförmigen, Querschnitt aufweist. In dieser bevorzugten Ausführungsform definiert die elektrische Isolierungseinheit in bevorzugter Weise den Querschnitt des Fluidkanals. Insbesondere bildet die elektrische Isolierungseinheit einen Fluidkanal aus, dessen Querschnitt kreisförmig und/oder einen polygonal, insbesondere viereckig, quadratisch, rechteckig oder trapezförmig ausgebildet ist.

In einem zweiten Aspekt der Erfindung wird die eingangs genannte Aufgabe gelöst durch einen Stator, der eine zuvor beschriebene Spulenanordnung gemäß dem ersten Aspekt oder einer bevorzugten Ausführungsform davon aufweist mit einer verteilten Wicklung der ersten Spuleneinheit und der zweiten Spuleneinheit.

Bei einer verteilten Wicklung ist vorgesehen, dass eine Spuleneinheit mindestens über zwei Zähne des Blechpakets gewickelt wird. Bei dieser Art der Wicklung ist ein einzelner Zahn des Blechpakets in der Regel durch zwei verschiedene Spuleneinheiten umwickelt.

Zu den Vorteilen, Ausführungsvarianten und Ausführungsdetails dieses weiteren Aspekts der Erfindung und ihrer Fortbildungen wird auch auf die vorangegangene Beschreibung zu den entsprechenden Merkmalen der Spulenanordnung bzw. der jeweiligen anderen Aspekte und deren Ausführungsvarianten verwiesen.

In einem dritten Aspekt der Erfindung wird die eingangs genannte Aufgabe gelöst durch einen Stator, der eine zuvor beschriebene Spulenanordnung gemäß dem ersten Aspekt oder einer bevorzugten Ausführungsform davon aufweist mit einer konzentrierten Wicklung der ersten Spuleneinheit und der zweiten Spuleneinheit.

Bei einer konzentrierten Wicklung ist vorgesehen, dass jeder Zahn des Blechpakets von nur einer einzigen Spuleneinheit umwickelt ist. Somit trägt ein einzelner Zahn des Blechpakets jeweils eine einzige Spuleneinheit. Entsprechend ist in dieser bevorzugten Ausführungsform vorgesehen, dass ein erster Zahn des Blechpakets die erste Spuleneinheit trägt und ein von dem ersten Zahn verschiedener zweiter Zahn des Blechpakets die zweite Spuleneinheit trägt.

Zu den Vorteilen, Ausführungsvarianten und Ausführungsdetails dieses weiteren Aspekts der Erfindung und ihrer Fortbildungen wird auch auf die vorangegangene Beschreibung zu den entsprechenden Merkmalen der Spulenanordnung bzw. der jeweiligen anderen Aspekte und deren Ausführungsvarianten verwiesen.

In einem vierten Aspekt der Erfindung wird die eingangs genannte Aufgabe gelöst durch einen Generator, insbesondere Generator für eine Windenergieanlage, der Generator aufweisend eine zuvor beschriebene Spulenanordnung mit den Merkmalen gemäß dem ersten Aspekt oder bevorzugten Ausführungsvarianten und/oder einen zuvor beschriebenen Stator gemäß dem zweiten oder dritten Aspekt.

Zu den Vorteilen, Ausführungsvarianten und Ausführungsdetails dieses weiteren Aspekts der Erfindung und ihrer Fortbildungen wird auch auf die vorangegangene Beschreibung zu den entsprechenden Merkmalen der Spulenanordnung bzw. der jeweiligen anderen Aspekte und deren Ausführungsvarianten verwiesen.

In einem fünften Aspekt der Erfindung wird die eingangs genannte Aufgabe gelöst durch eine Windenergieanlage, aufweisend eine zuvor beschriebene Spulenanordnung und/oder einen zuvor beschriebenen Stator und/oder einen zuvor beschriebenen Generator.

Zu den Vorteilen, Ausführungsvarianten und Ausführungsdetails dieses weiteren Aspekts der Erfindung und ihrer Fortbildungen wird auch auf die vorangegangene Beschreibung zu den entsprechenden Merkmalen der Spulenanordnung bzw. der jeweiligen anderen Aspekte und deren Ausführungsvarianten verwiesen.

Es soll verstanden werden, dass der Stator gemäß dem zweiten und dritten Aspekt der Erfindung, der Generator gemäß dem vierten Aspekt und die Windenergieanlage gemäß dem fünften Aspekt gleiche und ähnliche Aspekte aufweisen, wie sie insbesondere in Bezug zu dem ersten Aspekt und der bevorzugten Fortbildungen, insbesondere wie diese auch in den abhängigen Ansprüchen niedergelegt sind. Insofern wird vollumfänglich auf die obige Beschreibung und die Ansprüche der Spulenanordnung für weitere vorteilhafte Merkmale betreffend den Stator und/oder den Generator und/oder die Windenergieanlage Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Der Einfachheit halber sind nachfolgend für identische oder ähnliche Teile oder Teile mit identischer oder ähnlicher Funktion gleiche Bezugszeichen verwendet.

Bevorzugte Ausführungsformen der Erfindung werden beispielhaft anhand der beiliegenden Figuren erläutert. Es zeigen:
- Fig. 1:: eine schematische dreidimensionale Ansicht einer beispielhaften Ausführungsform einer Windenergieanlage;
- Fig. 2:: eine schematische dreidimensionale Ansicht einer beispielhaften Ausführungsform einer Spulenanordnung;
- Fig. 3:: eine schematische Draufsicht eines Ausschnitts der in Figur 2 dargestellten Spulenanordnung;
- Fig. 4:: eine schematische Seitenansicht eines Ausschnitts der in Figur 2 dargestellten Spulenanordnung;
- Fig. 5:: eine schematische Detailansicht der in Figur 4 schematisch dargestellten elektrischen Isolierungseinheit;
- Fig. 6:: eine schematische Draufsicht auf eine weitere beispielhafte Ausführungsform einer Spulenanordnung; und
- Fig. 7:: eine schematische Seitenansicht auf die in Figur 6 dargestellte Spulenanordnung.

In den Figuren sind gleiche oder im Wesentlichen funktionsgleiche bzw. -ähnliche Elemente mit den gleichen Bezugszeichen bezeichnet.

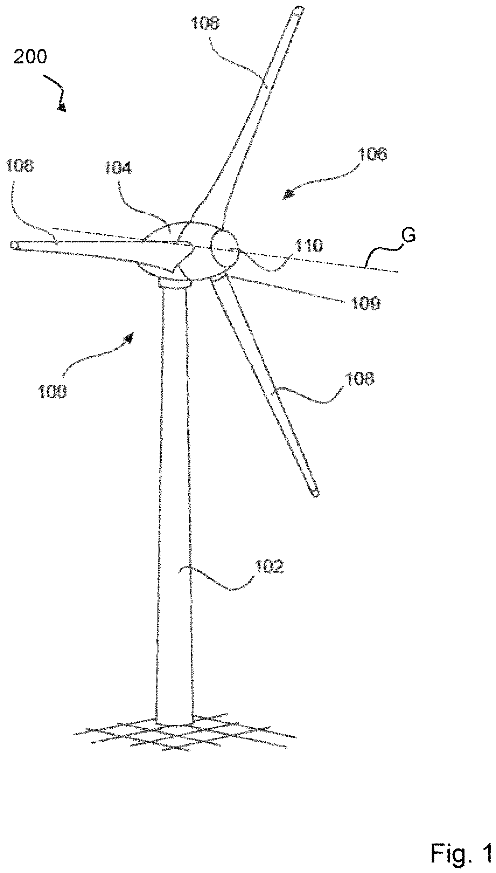

Figur 1 zeigt eine schematische, dreidimensionale Ansicht einer beispielhaften Ausführungsform einer Windenergieanlage 100. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Betrieb durch den Wind in eine Drehbewegung versetzt und treibt dadurch einen Generator, insbesondere einen Rotor 106 des Generators, an. Der Generator ist vorliegend innerhalb der Gondel 104 angeordnet und daher nicht sichtbar. Prinzipiell kann der Generator aber auch außerhalb der Gondel 104 angeordnet sein.

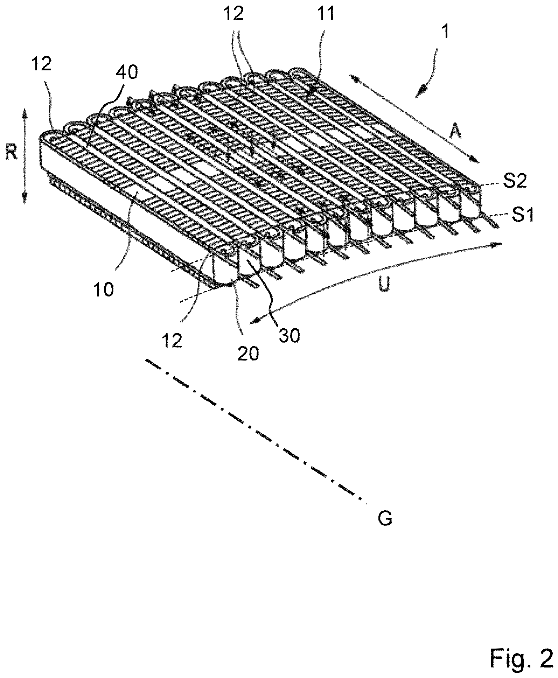

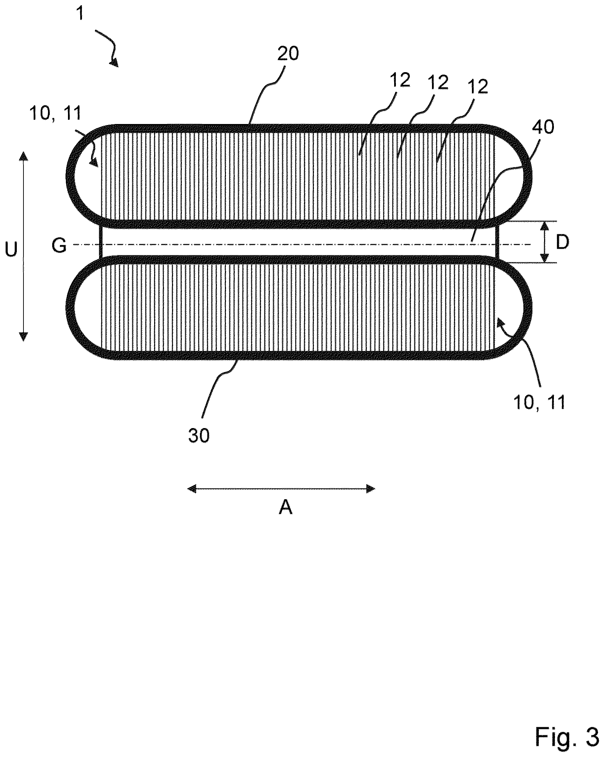

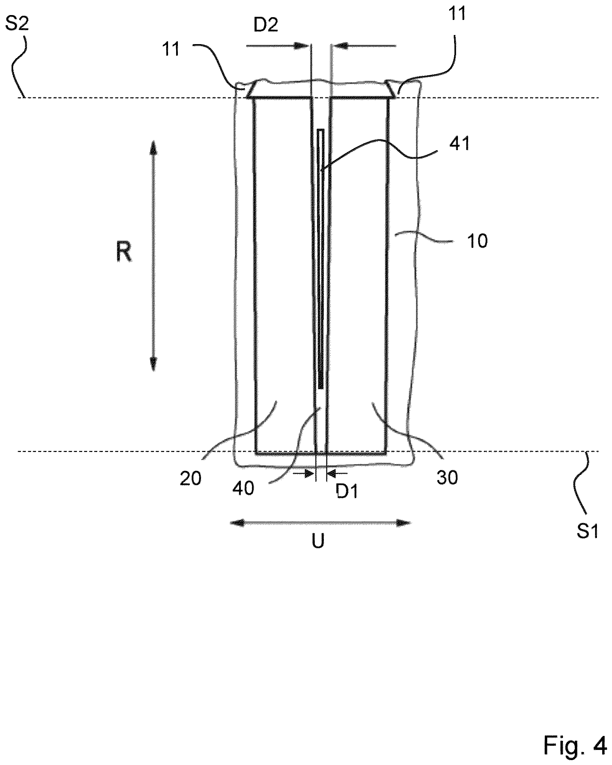

Figur 2 zeigt eine schematische dreidimensionale Ansicht einer beispielhaften Ausführungsform einer Spulenanordnung 1 für den Generator der in Figur 1 schematisch dargestellten Windenergieanlage 100. Figur 3 zeigt eine schematische Draufsicht und Figur 4 zeigt eine schematische Seitenansicht der in Figur 2 dargestellten Spulenanordnung 1. In dieser bevorzugten Ausführungsform ist ein Stator des Generators mit einer konzentrierten Wicklung der ersten und zweiten Spuleneinheit 20, 30 der Spulenanordnung 1 vorgesehen. Es ist aber zu verstehen, dass alternativ auch ein Stator mit einer verteilten Wicklung der ersten und zweiten Spuleneinheit der Spulenanordnung 1 vorgesehen werden könnte.

Der Generator der in Figur 1 schematisch dargestellten Windenergieanlage 100 ist vorliegend als Außenläufer ausgebildet, so dass der elektromagnetische Stator in Bezug zu der Drehachse G des Generators gegenüber dem elektromagnetischen Rotor in Radialrichtung R innenliegend angeordnet ist. In der in Figur 2 dargestellten Ausführungsform ist die Spulenanordnung als Teilringsegment ausgebildet, welche sich in Umfangsrichtung U zwischen zwei Stirnseiten mit einer Länge erstreckt, in Axialrichtung A mit einer Breite zwischen zwei Stirnflächen erstreckt und in Radialrichtung R zwischen einer innenliegenden Umfangsseite S1 und einer außenliegenden Umfangsseite S2 mit einer Höhe erstreckt.

Die Spulenanordnung 1 weist ein Stator-Blechpaket 10, eine erste und zweite Spuleneinheit 20, 30 und eine elektrische Isolierungseinheit 40 (in Figur 2 nicht dargestellt) auf. Das Stator-Blechpaket 10 umfasst mehrere Stahlbleche 12, welche in Axialrichtung A aufeinandergestapelt sind. Die Stahlbleche 12 und entsprechend das Stator-Blechpaket 10 umfassen Zähne 11, welche zumindest teilweise von der ersten und zweiten Spuleneinheit 20, 30 umwickelt sind. Hierbei ist vorgesehen, dass die erste und zweite Spuleneinheit 20, 30 in Umfangsrichtung U mit einem Abstand (D, D1, D2) beabstandet zueinander angeordnet sind (hierzu unten in Bezug zu den Figuren 3-7 gleich mehr).

Der beabstandete Anordnung der beiden Spuleneinheiten 20, 30 ist vorgesehen, um einen Kurzschluss zu vermeiden. Hierzu wird mindestens eine elektrische Isolierungseinheit 40 zwischen der ersten und zweiten Spuleneinheit 20, 30 angeordnet, welche zur elektrischen Isolierung ausgebildet ist und einen elektrischen Kurzschluss zwischen der ersten und zweiten Spuleneinheit 20, 30 verhindert.

Um einerseits einen hohen Wirkungsgrad und andererseits eine hohe Lebensdauer des Generators zu erzielen, wird der Generator der in Figur 1 dargestellten Windenergieanlage im Betrieb auf eine gewünschte Betriebstemperatur temperiert. Hierzu weist die elektrische Isolierungseinheit der in den Figuren 2-4 dargestellten Spulenanordnung einen Fluidkanal auf oder bildet diesen aus, der zur Temperierung, üblicherweise zur Kühlung, der Spuleneinheiten 20, 30 ein Temperierfluid führt. Der Fluidkanal 41 ist lediglich der in Figur 4 gezeigten Seitenansicht zu entnehmen. In den anderen beiden Ansichten wird der Fluidkanal durch die Außenseite der elektrischen Isolierungseinheit 40 verdeckt. Es strömt also im Betrieb der Spulenanordnung, d.h. des Generators bzw. der Windenergieanlage 100, zur Temperierung der ersten und zweiten Spuleneinheit 20, 30 ein Temperierfluid durch den Fluidkanal hindurch. Das Temperierfluid besteht üblicherweise aus Wasser und/oder Glykol und/oder Öl und/oder einem Gas und/oder einem Gasgemisch, insbesondere Luft, und/oder Flutec PP9.

Erfindungsgemäß ist vorgesehen, dass in der Isolierungseinheit 40 zum Führen des Temperierfluids keine Rohre oder Heatpipes oder dergleichen angeordnet sind, sondern die Isolierungseinheit selbst den Fluidkanal aufweist oder ausbildet. Insofern bildet die elektrische Isolierungseinheit 40 den Fluidkanal als Fluidleitung oder Fluidrohr aus, so dass die elektrische Isolierungseinheit 40 eine Fluidkanalwand des Fluidkanals bildet, welche den Fluidkanal 41 räumlich begrenzt. Es sind also bei der erfindungsgemäßen Lösung keine von der elektrischen Isolierungseinheit 40 separate Rohre, Heatpipes oder dergleichen erforderlich.

Für eine verbesserte Wärmeübertragung können an der Fluidkanalwand 42 Wirbelgeneratoren angeordnet sein und/oder die Fluidkanalwand 42 eine profilierte Oberfläche ausbilden, welche eine verbesserte Wärmeübertragung zwischen dem Temperierfluid und der ersten und zweiten Spuleneinheit 20, 30 ermöglicht. Alternativ können hierzu auch statische Mischer vorgesehen werden. Dies wird (im Vergleich zu einem Fluidkanal mit einer glatten Wand) im Wesentlichen durch eine Erhöhung der Turbulenz des Temperierfluids innerhalb des Fluidkanals erreicht.

Da die erste und zweite Spuleneinheit 20, 30 im Betrieb der Spulenanordnung mit dem Temperierfluid temperiert werden soll, muss die elektrische Isolierungseinheit 40 nicht nur elektrisch isolieren, um einen Kurzschluss zu unterbinden, sondern auch eine entsprechende Wärmeleitfähigkeit aufweisen. Der Wärmeleitfähigkeitskoeffizient der elektrischen Isolierungseinheit 40 beträgt bei 20°C mindestens 0.001 W/(m*K), vorzugsweise mindestens 0.1 W/(m*K), und maximal 50 W/(m*K), vorzugsweise maximal 3 W/(m*K).

Um einerseits ausreichend elektrische Isolierungseigenschaften zu gewährleisten und andererseits die gewünschte Wärmeleitfähigkeit zu ermöglichen, besteht die elektrische Isolierungseinheit 40 vorzugsweise aus einem glasfaserverstärkten Kunststoff und/oder einem Silikon, die wärmeleitfähige Additive wie zum Beispiel Silikon und/oder Keramik aufweisen.

Der Figur 4 ist zu entnehmen, dass der Abstand D zwischen der ersten und zweiten Spuleneinheit 20, 30 in Radialrichtung R von der außenliegenden Umfangsseite S2 zu der innenliegenden Umfangsseite S1 abnimmt. Dies ist darauf zurückzuführen, dass die Spulenanordnung 1 teilringförmig ausgebildet ist. Entsprechend beträgt an der innenliegenden Umfangsseite S1 der Abstand D1 zwischen der ersten und zweiten Spuleneinheit 20, 30 und an der außenliegenden Umfangsseite S2 beträgt der Abstand D2 zwischen der ersten und zweiten Spuleneinheit 20, 30, welcher größer ist als der Abstand D1 an der innenliegenden Umfangsseite S1.

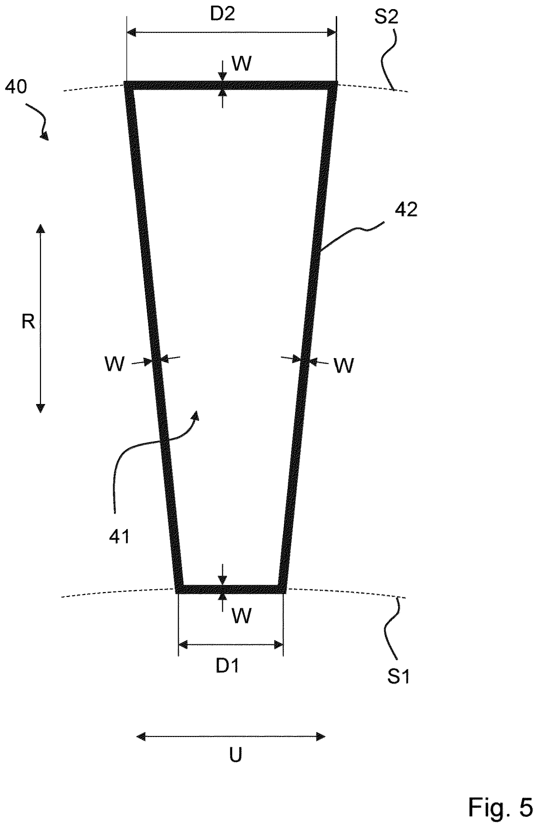

Entsprechend ist in dieser bevorzugten Ausführungsform die den Fluidkanal ausbildende Isolierungseinheit 40 und der Fluidkanal 41 selbst ausgebildet, nämlich so, dass diese einen trapezförmigen Querschnitt aufweisen. Dies ist im Detail in Figur 5 dargestellt, eine schematische Detailansicht der in Figur 4 schematisch dargestellten elektrischen Isolierungseinheit 40. Hierzu bildet die elektrische Isolierungseinheit 40 eine Fluidkanalwand 42 mit einer konstanten Wandstärke W aus, welche den Fluidkanal derart räumlich begrenzt, dass dieser orthogonal zur Axialrichtung A einen trapezförmigen Kanalquerschnitt ausbildet.

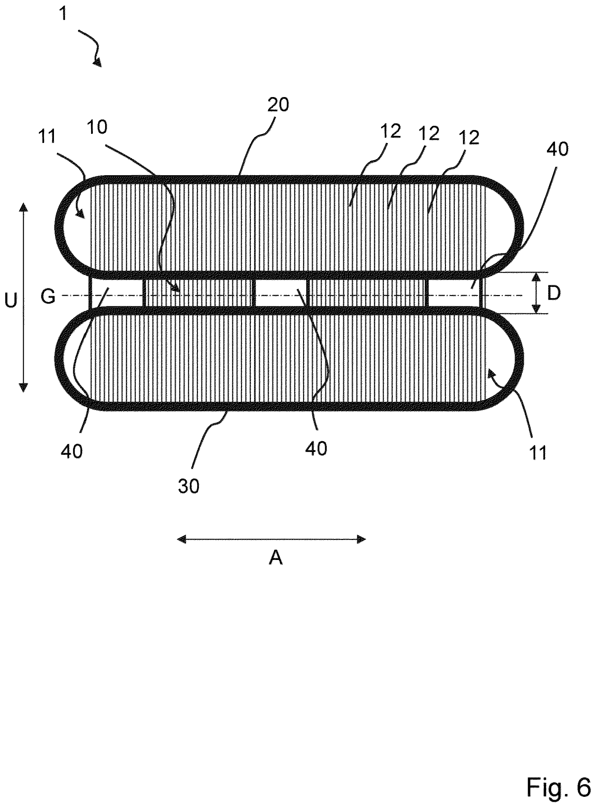

In Figur 6 ist eine schematische Draufsicht auf eine weitere beispielhafte Ausführungsform einer Spulenanordnung 1 gezeigt. Gemäß dieser bevorzugten Ausführungsform sind drei elektrische Isolierungseinheiten vorgesehen, welche sich in Axialrichtung nur teilweise zwischen der ersten und zweiten Spuleneinheit 20, 30 erstrecken. Es ist vorgesehen, dass jeweils eine elektrische Isolierungseinheit in Bezug zu der Axialrichtung A in den Endbereichen der ersten und zweiten Spuleneinheit 20, 30 angeordnet ist und eine elektrische Isolierungseinheit in Bezug zu der Axialrichtung mittig zwischen der ersten und zweiten Spuleneinheit 20, 30 angeordnet ist. Somit erstrecken sich die drei elektrischen Isolierungseinheiten 40 in Axialrichtung nur abschnittsweise zwischen der ersten und zweiten Spuleneinheit 20, 30. Diese Ausführungsform wird insbesondere vorgesehen, wenn zur Temperierung des Generators ein Gas, zum Beispiel Luft, als Temperierfluid verwendet werden soll.

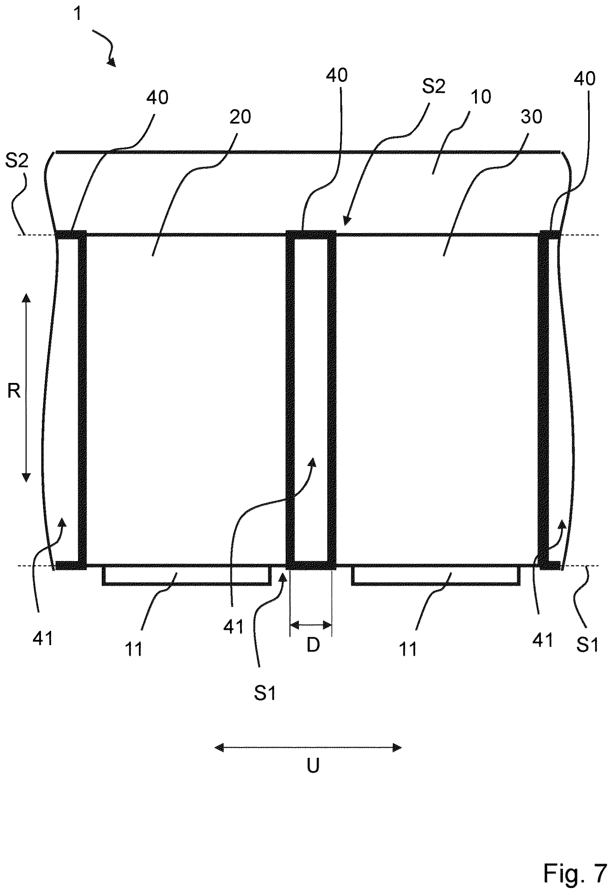

Die Figur 7 ist eine schematische Seitenansicht der in Figur 6 dargestellten Spulenanordnung. Es ist zu erkennen, dass in dieser Ausführungsform der Abstand D zwischen der ersten und zweiten Spuleneinheit konstant ist und sich nicht in Radialrichtung ändert. Entsprechend bildet die elektrische Isolierungseinheit 40 aufgrund der konstanten Fluidkanalwandstärke W einen Fluidkanal mit einem rechteckförmigen Querschnitt aus. Selbstverständlich können auch mehrerer elektrische Isolierungseinheiten vorgesehen werden, wenn die erste und zweite Spuleneinheit - wie in Figur 4 schematisch dargestellt -zueinander geneigt angeordnet sind, so dass der Abstand zwischen der ersten und zweiten Spuleneinheit 20, 30 in Radialrichtung R variiert und der Fluidkanal 41 einen trapezförmigen Querschnitt aufweist.

### Bezugszeichenliste

- 1: Spulenanordnung
- 10: Blechpaket
- 11: Zähne des Blechpakets
- 12: Stahlbleche
- 20: erste Spuleneinheit
- 30: zweite Spuleneinheit
- 40: elektrische Isolierungseinheit
- 41: Fluidkanal
- 42: Fluidkanalwand
- 100: Windenergieanlage
- 102: Turm
- 104: Gondel
- 106: aerodynamischer Rotor
- 108: Rotorblätter
- 110: Spinner
- D, D1, D2: Abstand zwischen der ersten und zweiten Spule
- A: Axialrichtung
- G: Drehachse des Generators
- R: Umfangsrichtung
- S1: innenliegende Umfangsseite
- S2: außenliegende Umfangsseite
- U: Umfangsrichtung

## Patentansprüche

1. Spulenanordnung (1) für eine elektrische Maschine, zum Beispiel für einen Generator, insbesondere für einen Generator einer Windenergieanlage (100), die Spulenanordnung (1) aufweisend:
• ein Blechpaket (10), insbesondere ein Stator-Blechpaket oder ein Rotor-Blechpaket, mit Zähnen (11), insbesondere mit Statorzähnen oder mit Rotorzähnen, die in einer Umfangsrichtung (U) beabstandet zueinander angeordnet sind,
• eine erste Spuleneinheit (20) und eine in Umfangsrichtung (U) beabstandet zu der ersten Spuleneinheit angeordnete zweite Spuleneinheit (30), wobei die erste und zweite Spuleneinheit (20, 30) mit einem Abstand (D, D1, D2) zueinander angeordnet sind, wobei die erste und zweite Spuleneinheit (20, 30) jeweils einen Zahn (11) des Blechpakets (10) zumindest teilweise umwickeln, und
• mindestens eine elektrische Isolierungseinheit (40), die zwischen der ersten Spuleneinheit (20) und der zweiten Spuleneinheit (30) angeordnet ist und zur elektrischen Isolierung ausgebildet ist, um einen elektrischen Kurzschluss zwischen der ersten Spuleneinheit (20) und der zweiten Spuleneinheit (30) zu unterbinden,
**dadurch gekennzeichnet, dass**
• die elektrische Isolierungseinheit (40) einen Fluidkanal (41) aufweist oder diesen ausbildet, wobei der Fluidkanal (41) ausgebildet ist, zur Temperierung der Spulenanordnung (1) ein Temperierfluid zu führen.

2. Spulenanordnung (1) nach dem vorhergehenden Anspruch 1, wobei die elektrische Isolierungseinheit (40) bei 20°C einen Wärmeleitkoeffizienten von mindestens von 0.001 W/(mK), vorzugsweise von mindestens 0.1 W/(mK), aufweist, und von maximal 50 W/(mK), vorzugsweise maximal 3 W/(mK), aufweist.

3. Spulenanordnung (1) nach einem der vorhergehenden Ansprüche 1 oder 2, wobei die elektrische Isolierungseinheit (40)
- aus einem glasfaserverstärkten Kunststoff und/oder einem Silikon besteht oder
- glasfaserverstärkten Kunststoff und/oder Silikon umfasst.

4. Spulenanordnung (1) nach einem der vorhergehenden Ansprüche 1 bis 3, wobei die elektrische Isolierungseinheit (40) wärmeleitfähige Additive aufweist, wobei die wärmeleitfähigen Additive vorzugsweise Additive aus Silikon und/oder Keramik umfassen.

5. Spulenanordnung (1) nach einem der vorhergehenden Ansprüche 1 bis 4, wobei der Abstand (D, D1, D2) zwischen der ersten und zweiten Spuleneinheit (20, 30) in einer Radialrichtung (R) variiert, wobei der Abstand (D, D1, D2) vorzugsweise in der Radialrichtung (R) von einer in Radialrichtung innenliegenden Umfangsseite (S1) der elektrischen Isolierungseinheit (40) zu einer in Radialrichtung (R) außenliegenden Umfangsseite (S2) der elektrischen Isolierungseinheit (40) größer wird, so dass der Abstand (D2) zwischen der ersten und zweiten Spuleneinheit (20, 30) an der außenliegenden Umfangsseite (S2) größer ist als der Abstand (D1) zwischen der ersten und zweiten Spuleneinheit (20, 30) an der innenliegenden Umfangsseite (S1).

6. Spulenanordnung (1) nach einem der vorhergehenden Ansprüche 1 bis 5, wobei die elektrische Isolierungseinheit (40) den Fluidkanal (41) als Fluidleitung oder als Fluidrohr ausbildet.

7. Spulenanordnung (1) nach einem der vorhergehenden Ansprüche 1 bis 6, wobei
• die elektrische Isolierungseinheit (40) eine Fluidkanalwand (42) des Fluidkanals (41) ausbildet, die den Fluidkanal (41) zumindest teilweise räumlich begrenzt, wobei
• in dem Fluidkanal (41), insbesondere an der Fluidkanalwand (42), Wirbelgeneratoren und/oder statische Mischer angeordnet sind, welche die Oberfläche zur Wärmeableitung der Wärme von der ersten Spuleneinheit und/oder der zweiten Spuleneinheit zu dem Temperierfluid im Betrieb erhöhen und/oder eine turbulente Strömung des Temperierfluids in dem Fluidkanal (41) bedingen, und/oder
• an der Fluidkanalwand (42) eine profilierte Oberfläche, insbesondere eine rillenförmige Oberfläche, ausgebildet ist, welche die Oberfläche zur Wärmeableitung der Wärme von der ersten Spuleneinheit und/oder der zweiten Spuleneinheit zu dem Temperierfluid im Betrieb erhöht und/oder eine turbulente Strömung des Temperierfluids in dem Fluidkanal (41) bedingt.

8. Spulenanordnung (1) nach einem der vorhergehenden Ansprüche 1 bis 7, wobei in dem Fluidkanal (41) im Betrieb der Spulenanordnung das Temperierfluid zur Temperierung der ersten Spuleneinheit und/oder der zweiten Spuleneinheit geführt wird.

9. Spulenanordnung (1) nach einem der vorhergehenden Ansprüche 1 bis 8, wobei das Temperierfluid aus Wasser und/oder Glykol und/oder Öl und/oder einem Gas und/oder einem Gasgemisch, insbesondere Luft, und/oder Flutec PP9 besteht und/oder das Temperierfluid Wasser und/oder Glykol und/oder Öl und/oder Gas und/oder ein Gasgemisch, insbesondere Luft, und/oder Flutec PP9 umfasst.

10. Spulenanordnung (1) nach einem der vorhergehenden Ansprüche 1 bis 9, wobei der Fluidkanal (41) einen kreisförmigen und/oder einen polygonalen, insbesondere einen viereckigen, quadratischen, rechteckigen oder trapezförmigen, Querschnitt aufweist.

11. Stator aufweisend eine Spulenanordnung (1) nach einem der vorhergehenden Ansprüche 1 bis 10 mit einer verteilten Wicklung der ersten Spuleneinheit und der zweiten Spuleneinheit.

12. Stator aufweisend eine Spulenanordnung (1) nach einem der vorhergehenden Ansprüche 1 bis 10 mit einer konzentrierten Wicklung der ersten Spuleneinheit und der zweiten Spuleneinheit.

13. Generator, insbesondere Generator für eine Windenergieanlage (100), der Generator aufweisend eine Spulenanordnung (1) nach einem der vorhergehenden Ansprüche 1 bis 10 und/oder einen Stator nach einem der vorhergehenden Ansprüche 11 oder 12.

14. Windenergieanlage (100), aufweisend eine Spulenanordnung (1) nach einem der vorhergehenden Ansprüche 1 bis 10 und/oder einen Stator nach einem der vorhergehenden Ansprüche 11 oder 12 und/oder einen Generator nach dem vorhergehenden Anspruch 13.
